(19) Europäisches Patentamt
European Patent Office
Office européen des brevets

(11) **EP 4 659 889 A1**

(12) **EUROPEAN PATENT APPLICATION**
published in accordance with Art. 153(4) EPC

(43) Date of publication:
**10.12.2025 Bulletin 2025/50**

(21) Application number: **24770179.0**

(22) Date of filing: **12.01.2024**

(51) International Patent Classification (IPC):
**B23K 20/12** $^{(2006.01)}$    **B23C 3/12** $^{(2006.01)}$

(52) Cooperative Patent Classification (CPC):
**B23C 3/12; B23K 20/12**

(86) International application number:
**PCT/JP2024/000607**

(87) International publication number:
**WO 2024/190057 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.03.2023 JP 2023037670**

(71) Applicant: **KABUSHIKI KAISHA KOBE SEIKO
SHO (KOBE STEEL, LTD.)
Hyogo 651-8585 (JP)**

(72) Inventors:
• **OKUDA, Masaki**
  **Fujisawa-shi, Kanagawa 251-8551 (JP)**
• **SHIMODA, Yoichiro**
  **Fujisawa-shi, Kanagawa 251-8551 (JP)**

(74) Representative: **Müller-Boré & Partner
Patentanwälte PartG mbB
Friedenheimer Brücke 21
80639 München (DE)**

(54) **FRICTION STIR WELDING TOOL AND FRICTION STIR WELDING METHOD**

(57) The friction stir welding tool includes a main body and a probe that protrudes in an axial direction from a center of one tip surface of the main body, and frictional heat is generated by pressing the probe against materials to be welded while rotating the probe to perform friction stir welding of the materials to be welded. The tip surface of the main body has an annular first surface connected to a root portion of the probe and extending radially outward, and a second surface connected to an outer peripheral edge of the first surface via a step portion and having a protrusion height lower than that of the first surface. The main body is provided with a cutting blade for cutting surfaces of the materials to be welded. A cutting edge of the cutting blade is disposed at a radial position of the outer peripheral edge of the first surface, and a protrusion height of the cutting edge in the axial direction is equal to a protrusion height of the outer peripheral edge of the first surface.

FIG. 2

## Description

TECHNICAL FIELD

The present invention relates to a friction stir welding tool and a friction stir welding method.

BACKGROUND ART

For example, as a welding method for welding materials to be welded when manufacturing a vehicle body of a vehicle, there is a friction stir welding (FSW) method for welding the materials to be welded using frictional heat. The friction stir welding method is a welding method in which a tool having a probe is rotated and moved along a butting portion of the materials to be welded while pressing the probe against the butting portion. This makes it possible to achieve high-strength welding with reduced deformation and distortion of the materials to be welded by the friction between the tool and the materials to be welded, and the heat input and stirring caused by the plastic flow of the materials, without using a material other than the materials to be welded. When friction stir welding is performed, the tool is pressed against the materials to be welded, causing the materials to flow outward from the tool, resulting in burrs. Therefore, in the next step of welding, the generated burrs are removed by cutting or grinding.

Patent Literature 1 discloses, as a tool used for the friction stir welding method, a friction stir welding tool in which a cutting blade is attached to a rotating member having a non-consumable rotating probe by a support mechanism, the cutting blade rotates by rotation of the rotating member and the non-consumable rotating probe, and thereby the cutting blade cuts an outer surface of a friction stir weld.

In addition, Patent Literature 2 discloses a friction stir welding tool including a deburring cutter that is screwed into a thread that is threaded onto an outer periphery of a shaft portion from which a pin portion to be inserted into members to be welded protrudes, and an attachment nut that is screwed into the thread to fix the deburring cutter to the shaft portion. In this friction stir welding tool, burrs generated in a bead portion of the members to be welded during friction stir welding are removed by a cutting blade while performing friction stir welding.

CITATION LIST

PATENT LITERATURE

Patent Literature 1: JP3523983B
Patent Literature 2: JP4774253B

SUMMARY OF INVENTION

TECHNICAL PROBLEM

According to the tools described in Patent Literatures 1 and 2, burrs generated during friction stir welding can be removed by the cutting blade. However, since these tools cut the surfaces of the materials to be welded by the cutting blade attached to the outer periphery, a width dimension of a bead which is a formation mark remaining after welding is large. In addition, in a case in which the tool is tilted to provide a push angle during welding, there is a problem that the amount of biting of the cutting blade into the materials to be welded increases, and the materials to be welded are thinned.

Therefore, an object of the present invention is to provide a friction stir welding tool and a friction stir welding method capable of favorably welding materials to be welded to each other and removing burrs while reducing the size of a bead width after welding.

SOLUTION TO PROBLEM

The present invention includes the following configurations.

(1) A friction stir welding tool including:

a columnar main body; and
a probe protruding in an axial direction from a center of one tip surface of the main body, in which
the friction stir welding tool is for generating frictional heat by pressing the probe against a butting portion between materials to be welded butted against each other while rotating the probe to perform friction stir welding of the materials to be welded,
the tip surface of the main body has

an annular first surface connected to a root portion of the probe and extending outward in a radial direction, and
a second surface connected to an outer peripheral edge of the first surface via a step portion and having a protrusion height lower than that of the first surface,

the main body is provided with a cutting blade configured to cut surfaces of the materials to be welded, and
a cutting edge of the cutting blade is disposed at a radial direction position of the outer peripheral edge of the first surface, and a protrusion height of the cutting edge in the axial direction is equal to a protrusion height of the outer peripheral edge of the first surface.

(2) A friction stir welding method using the friction stir welding tool according to (1), the friction stir welding method including:

butting the materials to be welded to each other;
pressing the probe against the butting portion of the materials to be welded while rotating the main body and moving the probe relatively along the butting portion; and
frictionally stirring the materials to be welded by the generated frictional heat and cutting the surface of the materials to be welded by the cutting blade.

ADVANTAGEOUS EFFECTS OF INVENTION

According to the present invention, it is possible to favorably weld the materials to be weld to each other and remove burrs while reducing the size of the bead width after welding.

BRIEF DESCRIPTION OF DRAWINGS

[Fig. 1] Fig. 1 is a side view of a friction stir welding tool.
[Fig. 2] Fig. 2 is a perspective view of main portions of the friction stir welding tool.
[Fig. 3] Fig. 3 is a side view of a tip portion of the friction stir welding tool.
[Fig. 4] Fig. 4 is a plan view of the tip portion of the friction stir welding tool as viewed from an axial direction.
[Fig. 5] Fig. 5 is a diagram illustrating a welding procedure of materials to be welded using the friction stir welding tool.
[Fig. 6] Fig. 6 is a diagram illustrating a welding state of the materials to be welded welded by the friction stir welding tool, which is a side view of the materials to be welded as cross-sectionally viewed in a direction orthogonal to a butting portion.
[Fig. 7] Fig. 7 is a diagram illustrating a welding state of the materials to be welded welded by the friction stir welding tool, which is a side view of the materials to be welded as cross-sectionally viewed in a direction along the butting portion.
[Fig. 8] Fig. 8 is a plan view of a tip portion of a friction stir welding tool according to a reference example.
[Fig. 9] Fig. 9 is a diagram illustrating a welding state of the materials to be welded welded by the friction stir welding tool according to the reference example, which is a schematic side view of the materials to be welded as cross-sectionally viewed in the direction orthogonal to the butting portion.
[Fig. 10] Fig. 10 is a diagram illustrating a welding state of the materials to be welded welded by the friction stir welding tool according to an embodiment, and is a schematic side view of the materials to be welded as cross-sectionally viewed in the direction orthogonal to the butting portion.
[Fig. 11] Fig. 11 is a plan view of the tip portion illustrating a friction surface of the friction stir welding tool according to the embodiment.

DESCRIPTION OF EMBODIMENTS

Hereinafter, an embodiment of the present invention will be described in detail with reference to the drawings. A friction stir welding tool according to the present embodiment is a tool that generates frictional heat by pressing a probe against a butting portion between materials to be welded that are butted against each other while rotating the probe to perform friction stir welding of the materials to be welded, and a specific configuration example thereof will be described below. The present invention is not limited to the configurations described below, and can be appropriately modified.

< Configuration of Friction Stir Welding Tool >

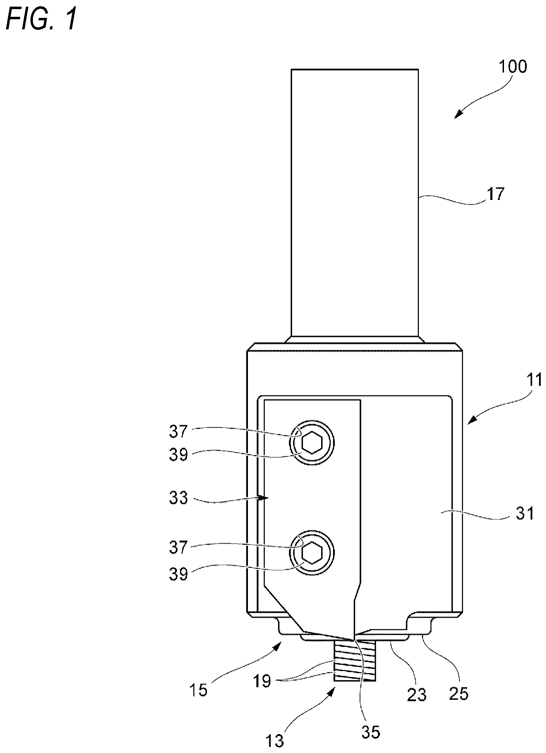

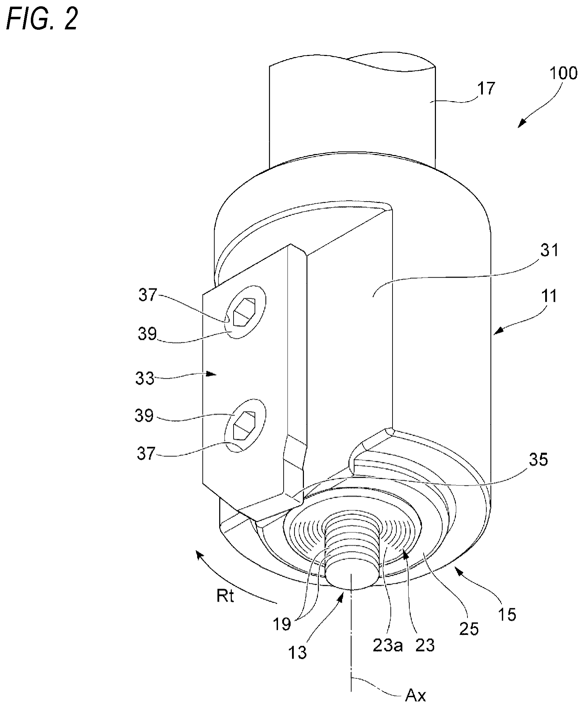

Fig. 1 is a side view of a friction stir welding tool 100. Fig. 2 is a perspective view of main portions of the friction stir welding tool 100.
The friction stir welding tool 100 according to the present embodiment includes a main body 11, a probe 13, and a cutting blade 33 provided on the main body 11. The main body 11 is formed in a columnar shape with a portion of the columnar shape cut out to define an attachment surface 31, which will be described later. The probe 13 is provided on one (lower side in Figs. 1 and 2) tip surface of the main body 11 so as to protrude in an axial direction. The probe 13 has a columnar shape coaxial with an outer circumferential circle of the main body 11, and spiral protrusions 19 are formed on an outer circumferential surface. A shoulder portion 15 is provided at a root portion of the probe 13. A tip surface constituting the shoulder portion 15 has a first surface 23 and a second surface 25. The first surface 23 and the second surface 25 are each disposed concentrically with the main body 11 in a plan view viewed from the axial direction of the main body 11.
A shank portion 17 is provided integrally with the main body 11 on the other side (upper side in Figs. 1 and 2) of the main body 11. The shank portion 17 is supported by a rotational drive motor (not illustrated) that drives the friction stir welding tool 100 in a rotation direction Rt. Instead of the shank portion 17, a tapered inner peripheral surface for fixing a tapered shaft may be formed on the main body 11, or a known mechanism for fixing a tool may be adopted.
In the present specification, a probe 13 side along the axial direction of the main body 11 may be described as "front", and a shank portion 17 side may be described as "rear".

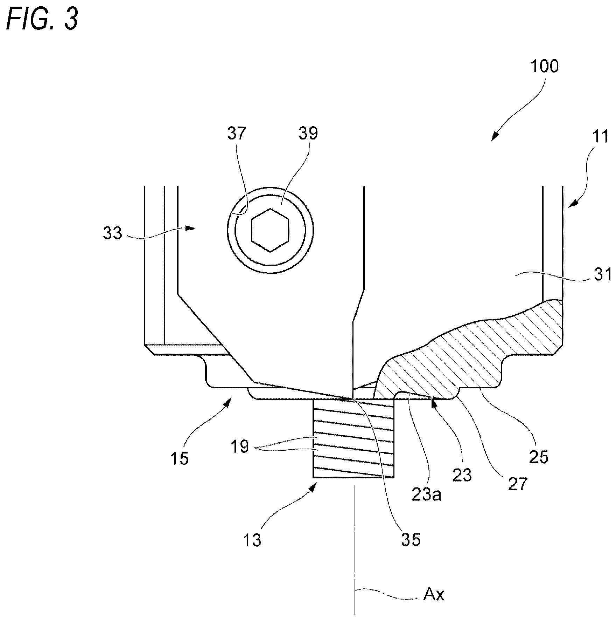

Fig. 3 is a side view illustrating a partial cross-section of a tip portion of the friction stir welding tool 100. The first surface 23 of the main body 11 is an annular surface connected to the root portion of the probe 13 and extending outward in a radial direction. The first surface 23 may have any shape in an axial cross-section of the main body 11, but in the present embodiment, the first surface 23 has a shape inclined inward in the radial direction toward a rear end of the probe 13. That is, the first surface 23 is inclined such that a protrusion height in the axial direction decreases toward an axis Ax of a probe center, and forms a recessed pocket portion 23a at the root portion on a rear side of the probe 13.

The second surface 25 is connected to an outer peripheral edge of the first surface 23 via a step portion 27, and has a lower protrusion height in the axial direction than that of the first surface 23. The step portion 27 connects the outer peripheral edge of the first surface 23 and an inner peripheral edge of the second surface 25, and makes the second surface 25 lower than the protrusion height of the outer peripheral edge of the first surface 23. The second surface 25 is provided so as to surround the outer periphery of the first surface 23, and is formed of a flat surface orthogonal to the axis Ax in a cross-sectional view. The second surface 25 may be a flat surface, or may be a tapered surface or a curved surface that forms a recessed pocket portion similar to the first surface 23.

The main body 11 has the attachment surface 31 on which the cutting blade 33 is provided. The attachment surface 31 may have any shape. As illustrated in Fig. 2, the attachment surface 31 in the present embodiment is a flat thinned surface formed by thinning a part of a cylindrical peripheral surface of the main body 11 in the radial direction. That is, the attachment surface 31 is formed by cutting out a part of the peripheral surface of the main body 11, and is a flat surface along the axis Ax. In this way, in the present embodiment, the cutting blade 33 can be brought closer to an axial center of the main body 11.

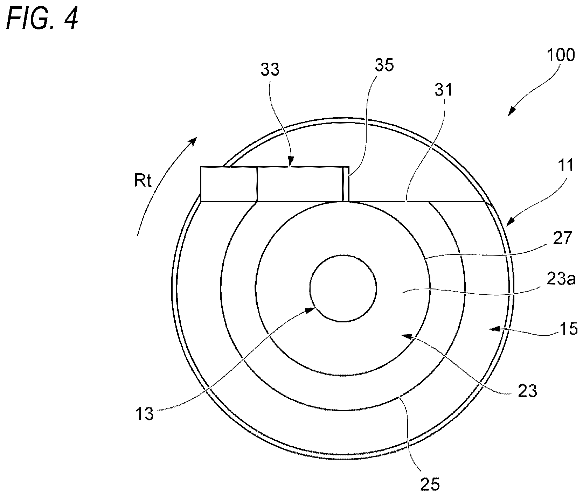

Fig. 4 is a plan view of the tip portion of the friction stir welding tool 100 as viewed from the axial direction. As illustrated in Fig. 4, the attachment surface 31 is constituted by a surface passing through a tangent line of the step portion 27 formed on the outer peripheral edge of the first surface 23. Therefore, a part of the second surface 25 is cut by the attachment surface 31.

The cutting blade 33 has a plate shape as a whole, and is fixed by bringing one surface thereof into surface contact with the attachment surface 31. A cutting edge 35 of the cutting blade 33 is disposed ahead in the rotation direction Rt, and is formed to extend in the radial direction with a width substantially equal to a radial width of the second surface 25 as illustrated in Fig. 4. As illustrated in Fig. 3, a protrusion height of the cutting edge 35 in the axial direction is equal to the protrusion height of the outer peripheral edge of the first surface 23. Here, "equal in height" means that the cutting edge 35 is disposed at the same height or substantially the same height position as the outer peripheral edge of the first surface 23 in the axial direction, and the height position may be shifted within a range in which cutting of burrs described later is not affected.

As illustrated in Fig. 1 and the like, the cutting blade 33 has two fixing insertion holes 37, which are, for example, counterbored holes. Thread holes (not illustrated) are formed in the attachment surface 31 of the main body 11 at positions corresponding to the fixing insertion holes 37. The cutting blade 33 is joined to the main body 11 by overlapping the cutting blade 33 with the attachment surface 31, inserting joining members 39 such as bolts into the respective fixing insertion holes 37, and screwing the fastening members 39 into the thread holes formed in the attachment surface 31. This joining form is merely an example, and an appropriate mechanism capable of adjusting the position of the cutting edge 35 may be provided.

<Procedure of Friction Stir Welding>

Next, a procedure of friction stir welding for welding materials to be welded to each other using the friction stir welding tool will be described.

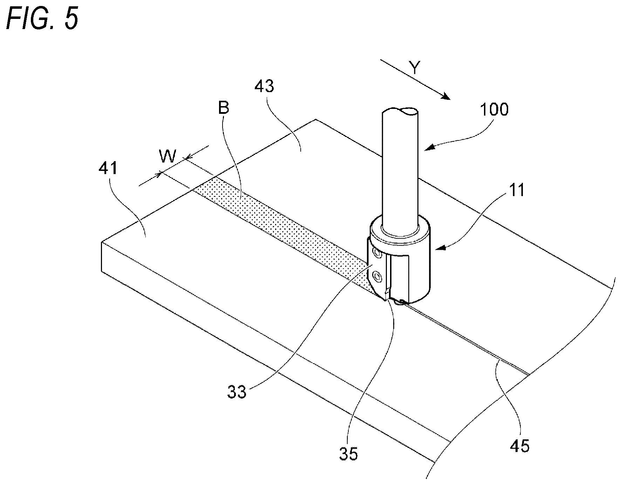

Fig. 5 is a diagram illustrating a welding procedure of materials to be welded 41 and 43 using the friction stir welding tool 100. First, two materials to be welded 41 and 43 are arranged to butt against each other, and a butting portion 45 is formed. Examples of the materials to be welded 41 and 43 that are welded to each other include an aluminum alloy plate.

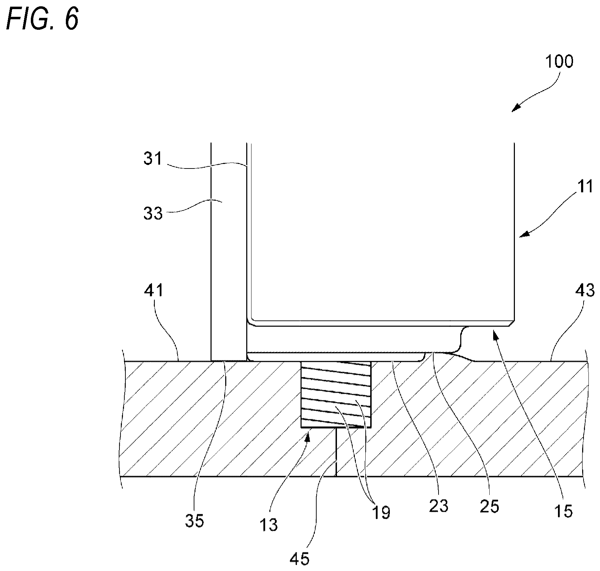

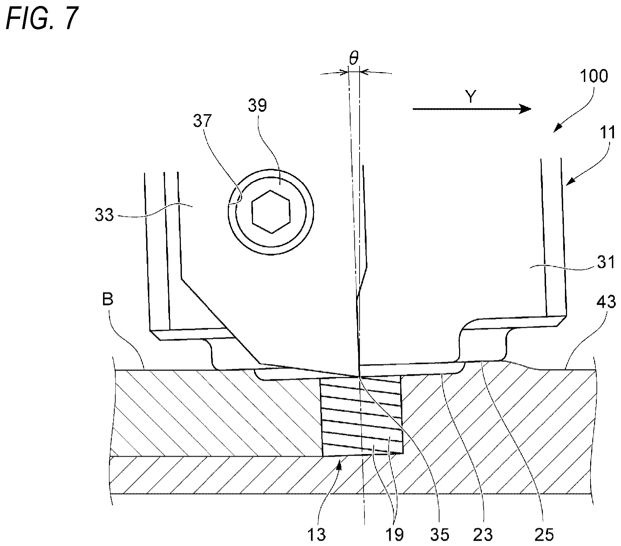

Fig. 6 is a diagram illustrating a welding state of the materials to be welded 41 and 43 welded by the friction stir welding tool 100, which is a side view of the materials to be welded 41 and 43 as cross-sectionally viewed in a direction orthogonal to the butting portion 45. Fig. 7 is a diagram illustrating a welding state of the materials to be welded 41 and 43 welded by the friction stir welding tool 100, which is a side view of the materials to be welded 41 and 43 as cross-sectionally viewed in a direction along the butting portion 45.

Next, as illustrated in Figs. 6 and 7, while the main body 11 of the friction stir welding tool 100 is rotated, the probe 13 is pressed against the butting portion 45 from one surface side of the materials to be welded 41 and 43 to generate frictional heat.

Then, the friction stir welding tool 100 is moved in a unidirectional movement direction Y (see Figs. 5 and 7) along the butting portion 45 while rotating the main body 11. At this time, the friction stir welding tool 100 is moved with an inclination angle θ (push angle) inclined rearward in the movement direction Y relative to a direction perpendicular to a plate surfaces of the materials to be welded 41 and 43 (see Fig. 7). That is, the friction stir welding tool 100 is tilted rearward in a welding direction at the inclination angle θ with respect to a normal direction of a facing surface of the materials to be welded 41 and 43 facing the friction stir welding tool 100.

As described above, when the rotating probe 13 is pressed and press-fitted into the butting portion 45 of the materials to be welded 41 and 43 and is moved in the movement direction Y along the butting portion 45, frictional heat is generated in the butting portion 45 by the probe 13 of the friction stir welding tool 100 and the first surface 23 in contact with and the materials to be welded 41 and 43, and the materials to be welded 41 and 43 are friction stirred. Thus, the materials to be welded 41 and 43 are welded to each other at the butting portion 45.

At this time, in the friction stir welding tool 100, a plastic fluid of the materials to be welded 41 and 43 plastically flowed by the probe 13 is temporarily held by the pocket portion 23a of the first surface 23 and overflows to the outer periphery of the first surface 23. Further, on the second surface 25 on the outer peripheral side of the first surface 23, a space between the second surface 25 and the materials to be welded 41 and 43 is filled with the plastic fluid overflowed to the outer periphery of the first surface 23. Therefore, in the shoulder portion 15, the second surface 25 and the plastic fluid come into contact with each other also on the outer peripheral side of the first surface 23, and frictional heat is generated.

As described above, in the friction stir welding tool 100, even when the first surface 23 having the pocket portion 23a has a small diameter, a sufficient amount of heat input is obtained by heat generation on the second surface 25, and friction stir welding is favorably performed.

In the friction stir welding tool 100, when the materials to be welded 41 and 43 are welded, the surfaces of the materials to be welded 41 and 43 are cut by the cutting edge 35 of the cutting blade 33 attached to the attachment surface 31 of the main body 11. As a result, burrs made of plastic fluid generated by friction stirring by the probe 13 are removed as cutting chips. As a result, a welded body in which the materials to be welded 41 and 43 are welded at the butting portion 45 forms a bead B (see Fig. 5), which is a formation mark created by the removal of burrs through cutting with the cutting blade 33.

Further, since the plastic fluid overflowed from the first surface 23 is pressed and crushed by the second surface 25 formed of a flat surface, the height of the plastic fluid reaching the cutting blade 33 becomes constant. Therefore, the cut depth of the cutting blade 33 becomes constant, and stable cutting is possible.

One of the friction stir welding tool 100 and the materials to be welded 41 and 43 may be moved relative to the other, and in addition to fixing one and moving the other, both may be moved relative to each other.

<Comparison with Reference Example>

Here, a friction stir welding tool 200 according to a reference example will be described, and the friction stir welding tool 100 according to the present embodiment and the friction stir welding tool 200 according to the reference example will be compared.

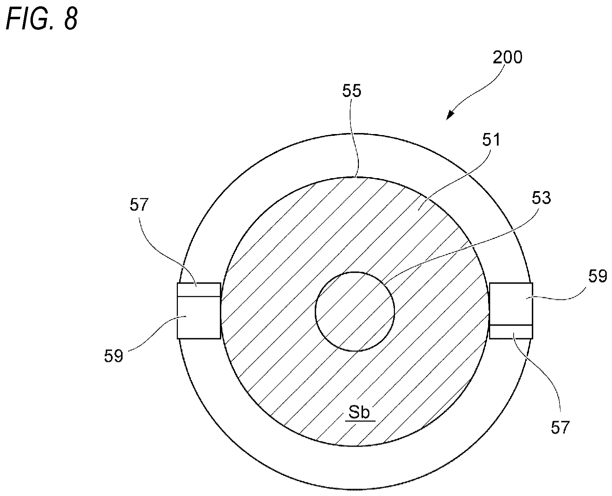

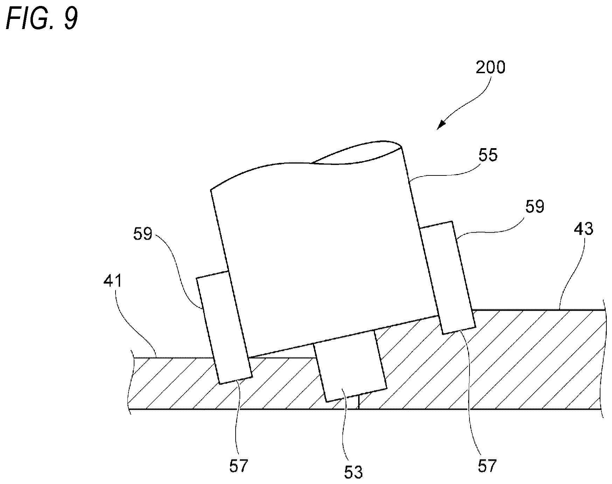

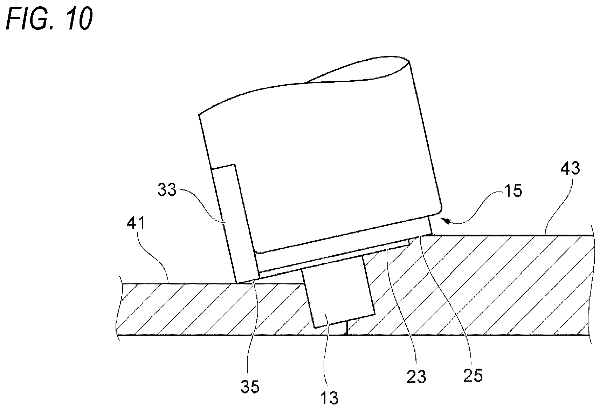

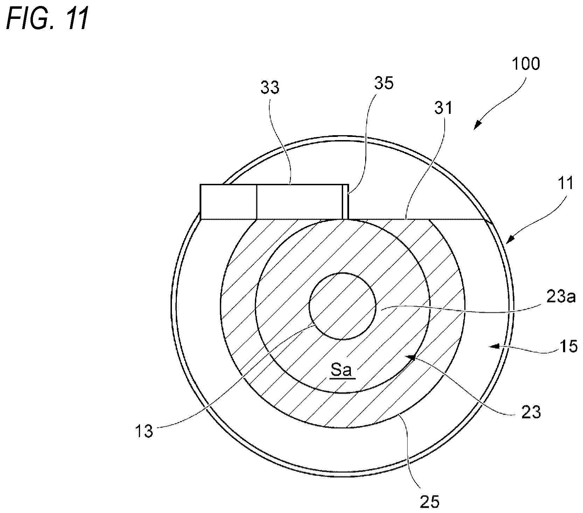

Fig. 8 is a plan view of a tip portion of the friction stir welding tool 200 according to the reference example. Fig. 9 is a diagram illustrating a welding state of the materials to be welded 41 and 43 welded by the friction stir welding tool 200 according to the reference example, which is a schematic side view of the materials to be welded 41 and 43 as cross-sectionally viewed in the direction orthogonal to the butting portion 45. Fig. 10 is a diagram illustrating a welding state of the materials to be welded 41 and 43 welded by the friction stir welding tool 100 according to the embodiment, and is a schematic side view of the materials to be welded 41 and 43 as cross-sectionally viewed in the direction orthogonal to the butting portion 45. Fig. 11 is a plan view of the tip portion illustrating a friction surface of the friction stir welding tool 100 according to the embodiment.

As illustrated in Fig. 8, the friction stir welding tool 200 according to the reference example includes a main body 55 having a probe 53 on a tip surface of a shoulder portion 51, and cutting blades 59 each having a cutting edge 57 are attached to an outer periphery of the main body 55. In the friction stir welding tool 200 according to the reference example, when the materials to be welded 41 and 43 are welded, surfaces of the materials to be welded 41 and 43 are cut by the cutting blade 59 attached to the outer periphery of the main body 55, and burrs made of a plastic fluid generated by friction stirring by the probe 53 are cut.

In the friction stir welding tool 200 according to the reference example, since the surfaces of the materials to be welded 41 and 43 are cut by the cutting blade 59 attached to the outer periphery, the bead B having a large processing width W is formed. Moreover, since the cutting blade 59 is provided on the outer periphery of the main body 55, when friction stir welding is performed with a push angle formed by the inclination angle θ, the amount of biting of the cutting blade 59 into the materials to be welded 41 and 43 increases. As a result, thicknesses of the materials to be welded 41 and 43 are reduced by the cutting blade 59 biting into the materials to be welded 41 and 43.

In contrast, in the friction stir welding tool 100 according to the present embodiment, the cutting blade 33 for cutting and removing burrs is provided in the region of the second surface 25, and the cutting edge 35 is disposed at substantially the same height position as the outer diameter portion of the first surface 23. Therefore, even when the friction stir welding is performed with the push angle formed by the inclination angle θ, the amount of biting of the cutting blade 33 into the materials to be welded 41 and 43 can be reduced. Accordingly, it is possible to reduce thinning of the materials to be welded 41 and 43 due to biting of the cutting blade 33 into the materials to be welded 41 and 43. In the present embodiment, the attachment surface 31 is a flat thinned surface formed by thinning a part of the cylindrical peripheral surface of the main body 11 in the radial direction. Therefore, since the cutting blade 33 can be brought closer to the axial center of the main body 11, the width of the processing mark (processing width W, see Fig. 5) along the butting portion 45 of the materials to be welded 41 and 43 can be reduced.

Further, as illustrated in Fig. 9, when the materials to be welded 41 and 43 having different plate thicknesses are friction stir welded to form a tailored blank material having portions having different plate thicknesses, the probe 53 is press-fitted with the friction stir welding tool 200 tilted in a direction orthogonal to the movement direction with respect to the butting portion 45. Therefore, in this case, the amount of biting of the cutting blade 59 into the material to be welded 41 on the inclined side of the friction stir welding tool 200 becomes larger, and the thickness of the material to be welded 41 becomes thinner.

In contrast, according to the friction stir welding tool 100 of the present embodiment, as illustrated in Fig. 10, even when the friction stir welding tool 100 is obliquely tilted to the butting portion 45 of the materials to be welded 41 and 43 having different plate thicknesses, that is, even when the probe 13 is obliquely press-fitted toward the material to be welded 41 on the thinner side in a plane orthogonal to a direction of the relative movement between the friction stir welding tool 100 and the materials to be welded 41 and 43, it is possible to reduce the amount of biting of the cutting blade 33 into the material to be welded 41 on the inclined side of the friction stir welding tool 100. Therefore, thinning of the material to be welded 41 can be reduced.

Here, the heat input Q [W] to a friction stir position when the friction stir welding is performed is expressed by the following Formula (1).

[Math. 1]

$$Q = \frac{4}{3}\pi^2 \mu P N R^3 \quad \cdots (1)$$

In the formula, $\mu$: friction coefficient,

P: pressure at friction stir position [N/m$^3$],
N: rotational speed of tool [S$^{-1}$],
R: radius of shoulder [m].

As illustrated in the above Formula (1), the heat input Q to the friction stir position when the friction stir welding is performed is greatly affected by the radius R of the shoulder of the friction stir welding tool (tool), and the heat input Q increases as the contact area with the material to be welded increases.

In the friction stir welding tool 200 according to the reference example, a surface Sb (hatched portion in Fig. 8) of the tip of the shoulder portion 51 is a friction surface that comes into contact with the materials to be welded 41 and 43. Meanwhile, in the friction stir welding tool 100 according to the present embodiment, as illustrated in Fig. 11, a surface Sa (hatched portion in Fig. 11) including not only the first surface 23 but also the second surface 25 is a friction surface that comes into contact with the materials to be welded 41 and 43.

When the surface Sa serving as the friction surface of the friction stir welding tool 100 according to the present embodiment and the surface Sb serving as the friction surface of the friction stir welding tool 200 according to the reference example have the same diameter, the surface Sa is smaller than the surface Sb by the amount by which the attachment surface 31 is formed. However, since the reduction amount of the surface Sa serving as the friction surface is a small amount, equivalent to cutting out a part of the circumferential surface of the main body 11, the surface Sa serving as the friction surface has a sufficient area as a friction surface for obtaining the heat input required for good friction stirring.

An attachment position of the cutting blade 33 is preferably adjustable in the axial direction with respect to the main body 11. In this case, the attachment position of the cutting blade 33 can be adjusted according to the material or the like of the materials to be welded 41 and 43, and the rake angle or the clearance angle of the cutting edge 35 can be adjusted.

As described above, the present invention is not limited to the above-described embodiments, and combinations of the respective configurations of the embodiments and changes and applications made by those skilled in the art based on the description of the specification and well-known techniques are also intended for the present invention and are included in the scope of protection.

As described above, the present specification discloses the following matters.

(1) A friction stir welding tool including:

a columnar main body; and
a probe protruding in an axial direction from a center of one tip surface of the main body, in which
the friction stir welding tool is for generating frictional heat by pressing the probe against a butting portion between materials to be welded butted against each other while rotating the probe to perform friction stir welding of the materials to be welded,
the tip surface of the main body has

an annular first surface connected to a root portion of the probe and extending outward in a radial direction, and
a second surface connected to an outer peripheral edge of the first surface via a step portion and having a protrusion height lower than that of the first surface,

the main body is provided with a cutting blade configured to cut surfaces of the materials to be welded, and

a cutting edge of the cutting blade is disposed at a radial direction position of the outer peripheral edge of the first surface, and a protrusion height of the cutting edge in the axial direction is equal to a protrusion height of the outer peripheral edge of the first surface.

According to this friction stir welding tool, when the materials to be welded are welded, the surfaces of the materials to be welded are cut by the cutting edge of the cutting blade provided in the main body. As a result, burrs made of the plastic fluid generated by friction stirring by the probe can be cut and removed. Further, the cutting blade for cutting and removing burrs is provided in the region of the second surface, and the cutting edge is disposed at the same height position as the outer diameter portion of the first surface. Therefore, even when friction stir welding is performed with the push angle, the amount of biting of the cutting blade into the materials to be welded can be reduced. Accordingly, it is possible to reduce thinning of the materials to be welded due to biting of the cutting blade into the materials to be welded. Moreover, since a surface including not only the first surface but also the second surface can be made into a friction surface that comes into contact with the materials to be welded, it is possible to obtain a heat input for good friction stirring.

(2) The friction stir welding tool according to (1), in which the first surface forms a recessed pocket portion in which the protrusion height decreases toward the root portion of the probe.

According to this friction stir welding tool, the plastic fluid temporarily held by the first surface having the pocket portion and overflowing is pressed and crushed by the second surface formed of a flat surface. As a result, the height of the plastic fluid reaching the cutting blade becomes constant. Therefore, the cut depth of the cutting blade becomes constant, and stable cutting is possible.

(3) The friction stir welding tool according to (1), in which

the main body has a shank portion on an axially opposite side of the tip surface.

This friction stir welding tool can be easily attached to various machine tools.

(4) The friction stir welding tool according to (1), in which

the main body has a shape having a thinned surface formed by thinning a part of a cylindrical peripheral surface in the radial direction, and the cutting blade is fixed to the reduced thickness surface.

According to this friction stir welding tool, the cutting blade does not largely protrude outward in the radial direction of the main body, and thinning of the materials to be welded during welding can be reduced.

(5) A friction stir welding method using the friction stir welding tool according to any one of (1) to (4), the friction stir welding method including:

butting the materials to be welded to each other; pressing the probe against the butting portion of the materials to be welded while rotating the main body and moving the probe relatively along the butting portion; and frictionally stirring the materials to be welded by the generated frictional heat and cutting the surface of the materials to be welded by the cutting blade.

According to this friction stir welding method, when the materials to be welded are welded, the surfaces of the materials to be welded can be cut by the cutting edge of the cutting blade provided in the main body. As a result, burrs made of the plastic fluid generated by friction stirring by the probe can be cut and removed. Further, the cutting blade for cutting and removing burrs is provided in the region of the second surface, with the cutting edge disposed at the same height position as the outer diameter portion of the first surface, and is brought closer to the center of the main body. Therefore, the processing width of the bead, which is a processing mark along the butting portion of the materials to be welded, can be reduced. Moreover, by using a surface including not only the first surface but also the second surface as a friction surface that comes into contact with the materials to be welded, it is possible to obtain a heat input for good friction stirring.

(6) The friction stir welding method according to (5), in which

when the friction stir welding tool and the materials to be welded are relatively moved along the butting portion, the friction stir welding tool is tilted rearward in a welding direction with respect to a normal direction of a facing surface of the materials to be welded facing the friction stir welding tool.

According to this friction stir welding method, by tilting the friction stir welding tool rearward in the welding direction from the normal direction of the materials to be welded, it is possible to prevent internal defects occurring when friction stir welding is performed. Accordingly, a decrease in welding strength can be prevent.

(7) The friction stir welding method according to (6), in which

when thicknesses of the materials to be welded are different from each other, the friction stir welding tool is tilted toward the material to be welded on a thinner side in a plane orthogonal to a direction of the relative movement.

According to this friction stir welding method, when materials to be welded having different thicknesses are welded, the amount of biting of the cutting blade into the material to be welded on the thinner side on which the friction stir welding tool is tilted can be reduced, and thinning of this material to be welded can be reduced.

The present application is based on a Japanese Patent Application (Patent Application No. 2023-037670) filed on March 10, 2023, contents of which are incorporated herein by reference.

REFERENCE SIGNS LIST

11: main body
13: probe
17: shank portion
23: first surface
23a: pocket portion
25: second surface
33: cutting blade
35: cutting edge
41, 43: material to be welded
45: butting portion
100: friction stir welding tool

**Claims**

1. A friction stir welding tool comprising:

   a columnar main body; and
   a probe protruding in an axial direction from a center of one tip surface of the main body, wherein
   the friction stir welding tool is for generating frictional heat by pressing the probe against a butting portion between materials to be welded butted against each other while rotating the probe to perform friction stir welding of the materials to be welded,
   the tip surface of the main body has

   an annular first surface connected to a root portion of the probe and extending outward in a radial direction, and
   a second surface connected to an outer peripheral edge of the first surface via a step portion and having a protrusion height lower than that of the first surface,

   the main body is provided with a cutting blade configured to cut surfaces of the materials to be welded, and
   a cutting edge of the cutting blade is disposed at a radial direction position of the outer peripheral edge of the first surface, and a protrusion height of the cutting edge in the axial direction is equal to a protrusion height of the outer peripheral edge of the first surface.

2. The friction stir welding tool according to claim 1, wherein
   the first surface forms a recessed pocket portion in which the protrusion height decreases toward the root portion of the probe.

3. The friction stir welding tool according to claim 1, wherein
   the main body has a shank portion on an axially opposite side of the tip surface.

4. The friction stir welding tool according to claim 1, wherein

   the main body has a shape having a thinned surface formed by thinning a part of a cylindrical peripheral surface in the radial direction, and
   the cutting blade is fixed to the reduced thickness surface.

5. A friction stir welding method using the friction stir welding tool according to any one of claims 1 to 4, the friction stir welding method comprising:

   butting the materials to be welded to each other;
   pressing the probe against the butting portion of the materials to be welded while rotating the main body and moving the probe relatively along the butting portion; and
   frictionally stirring the materials to be welded by the generated frictional heat and cutting the surface of the materials to be welded by the cutting blade.

6. The friction stir welding method according to claim 5, wherein
   when the friction stir welding tool and the materials to be welded are relatively moved along the butting portion, the friction stir welding tool is tilted rearward in a welding direction with respect to a normal direction of a facing surface of the materials to be welded facing the friction stir welding tool.

7. The friction stir welding method according to claim 6, wherein
   when thicknesses of the materials to be welded are different from each other, the friction stir welding tool is tilted toward the material to be welded on a thinner side in a plane orthogonal to a direction of the relative movement.

*FIG. 1*

FIG. 2

*FIG. 3*

*FIG. 4*

## FIG. 5

*FIG. 6*

*FIG. 7*

FIG. 8

FIG. 9

FIG. 10

*FIG. 11*

# INTERNATIONAL SEARCH REPORT

| International application No. |
|---|
| **PCT/JP2024/000607** |

**A.    CLASSIFICATION OF SUBJECT MATTER**

*B23K 20/12*(2006.01)i; *B23C 3/12*(2006.01)i
FI:    B23K20/12 344; B23C3/12 A

According to International Patent Classification (IPC) or to both national classification and IPC

**B.    FIELDS SEARCHED**

Minimum documentation searched (classification system followed by classification symbols)

B23K20/12; B23C3/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2003-164976 A (KAWASAKI JUKOGYO KABUSHIKI KAISHA) 10 June 2003 (2003-06-10)<br>    paragraphs [0024]-[0034], fig. 1-3 | 1, 3-5 |
| X | JP 2020-121339 A (AISIN TAKAOKA CO., LTD.) 13 August 2020 (2020-08-13)<br>    paragraphs [0018]-[0034], fig. 1-5 | 1, 3, 5-6 |
| A | CN 115555861 A (HARBIN INSTITUTE OF TECHNOLOGY, WEIHAI) 03 January 2023 (2023-01-03)<br>    entire text, all drawings | 1-7 |
| A | JP 2000-334578 A (HITACHI, LTD.) 05 December 2000 (2000-12-05)<br>    entire text, all drawings | 1-7 |
| A | CN 103084731 A (NANJING UNIVERSITY OF AERONAUTICS AND ASTRONAUTICS) 08 May 2013 (2013-05-08)<br>    entire text, all drawings | 1-7 |

☑ Further documents are listed in the continuation of Box C.          ☑ See patent family annex.

| | |
|---|---|
| *      Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **01 February 2024** | **13 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/000607**

| C. | DOCUMENTS CONSIDERED TO BE RELEVANT | |
|---|---|---|
| Category* | Citation of document, with indication, where appropriate, of the relevant passages | Relevant to claim No. |
| A | JP 2017-070994 A (UACJ CORP.) 13 April 2017 (2017-04-13)<br>entire text, all drawings | 1-7 |

Form PCT/ISA/210 (second sheet) (July 2022)

**INTERNATIONAL SEARCH REPORT**
Information on patent family members

International application No.

**PCT/JP2024/000607**

| Patent document cited in search report | | | Publication date (day/month/year) | Patent family member(s) | | | Publication date (day/month/year) |
|---|---|---|---|---|---|---|---|
| JP | 2003-164976 | A | 10 June 2003 | US paragraphs [0033]-[0044], fig. 1-3 CN | 2003/0098335 1421295 | A1 A | |
| JP | 2020-121339 | A | 13 August 2020 | (Family: none) | | | |
| CN | 115555861 | A | 03 January 2023 | (Family: none) | | | |
| JP | 2000-334578 | A | 05 December 2000 | US entire text, all drawings | 2001/0004989 | A1 | |
| CN | 103084731 | A | 08 May 2013 | (Family: none) | | | |
| JP | 2017-070994 | A | 13 April 2017 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3523983 B
- JP 4774253 B

- JP 2023037670 A